# FASCICULE DE BREVET EUROPEEN

(11) **EP 3 484 728 B1**
(45) Date de publication et mention de la délivrance du brevet: **02.09.2020**
(21) Numéro de dépôt: 17748535.6
(22) Date de dépôt: 11.07.2017
(51) Int. Cl.: B60C 15/06, B60C 9/02, B60C 15/00

(54) **PNEUMATIQUE DONT LA ZONE DU BOURRELET EST ALLEGEE**
REIFEN MIT WULSTBEREICH MIT REDUZIERTEM GEWICHT
TYRE WITH A REDUCED-WEIGHT BEAD REGION

(30) Priorité: 13.07.2016 FR 1656718
(43) Date de publication de la demande: 22.05.2019
(73) Titulaire: Compagnie Générale des Etablissements Michelin, 63000 Clermont-Ferrand (FR)
(72) Inventeur: JOULIN, Emmanuel, 63040 Clermont-Ferrand Cedex 9 (FR); GUERBERT-JUBERT, Jean-Luc, 63040 Clermont-Ferrand Cedex 9 (FR)
(74) Mandataire: Le Cam, Stéphane Georges Elie
(86) Numéro de dépôt international: PCT/FR2017/051895
(87) Numéro de publication internationale: WO 2018/011512

(56) Documents cités:
- EP-A1- 1 393 931
- FR-A1- 2 787 744
- FR-A1- 2 969 038
- US-A- 5 236 031

## Description

La présente invention concerne un pneumatique, à armature de carcasse radiale et plus particulièrement un pneumatique destiné à équiper des véhicules portant de lourdes charges et roulant à vitesse soutenue, tels que, par exemple les camions, tracteurs, remorques ou bus routiers.

D'une manière générale dans les pneumatiques de type poids-lourds, l'armature de carcasse est ancrée de part et d'autre dans la zone du bourrelet et est surmontée radialement par une armature de sommet constituée d'au moins deux couches, superposées et formées de fils ou câbles parallèles dans chaque couche et croisés d'une couche à la suivante en faisant avec la direction circonférentielle des angles compris entre 10° et 45°. Lesdites couches de travail, formant l'armature de travail, peuvent encore être recouvertes d'au moins une couche dite de protection et formée d'éléments de renforcement avantageusement métalliques et extensibles, dits élastiques. Elle peut également comprendre une couche de fils ou câbles métalliques à faible extensibilité faisant avec la direction circonférentielle un angle compris entre 45° et 90°, cette nappe, dite de triangulation, étant radialement située entre l'armature de carcasse et la première nappe de sommet dite de travail, formées de fils ou câbles parallèles présentant des angles au plus égaux à 45° en valeur absolue. La nappe de triangulation forme avec au moins ladite nappe de travail une armature triangulée, qui présente, sous les différentes contraintes qu'elle subit, peu de déformations, la nappe de triangulation ayant pour rôle essentiel de reprendre les efforts de compression transversale dont est l'objet l'ensemble des éléments de renforcement dans la zone du sommet du pneumatique.

Des câbles sont dits inextensibles lorsque lesdits câbles présentent sous une force de traction égale à 10% de la force de rupture un allongement relatif au plus égal à 0,2%.

Des câbles sont dits élastiques lorsque lesdits câbles présentent sous une force de traction égale à la charge de rupture un allongement relatif au moins égal à 3% avec un module tangent maximum inférieur à 150 GPa.

Des éléments de renforcement circonférentiels sont des éléments de renforcement qui font avec la direction circonférentielle des angles compris dans l'intervalle + 2,5°, - 2,5° autour de 0°.

La direction circonférentielle du pneumatique, ou direction longitudinale, est la direction correspondant à la périphérie du pneumatique et définie par la direction de roulement du pneumatique.

La direction transversale ou axiale du pneumatique est parallèle à l'axe de rotation du pneumatique.

La direction radiale est une direction coupant l'axe de rotation du pneumatique et perpendiculaire à celui-ci.

L'axe de rotation du pneumatique est l'axe autour duquel il tourne en utilisation normale.

Un plan radial ou méridien est un plan qui contient l'axe de rotation du pneumatique.

Le plan médian circonférentiel, ou plan équatorial, est un plan perpendiculaire à l'axe de rotation du pneu et qui divise le pneumatique en deux moitiés.

En ce qui concerne les fils ou câbles métalliques, les mesures de force à la rupture (charge maximale en N), de résistance à la rupture (en MPa), d'allongement à la rupture (allongement total en %) et de module (en GPa) sont effectuées en traction selon la norme ISO 6892 de 1984.

En ce qui concerne les compositions de caoutchouc, les mesures de module sont effectuées en traction selon la norme AFNOR-NFT-46002 de septembre 1988 : on mesure en seconde élongation (i.e., après un cycle d'accommodation) le module sécant nominal (ou contrainte apparente, en MPa) à 10% d'allongement (conditions normales de température et d'hygrométrie selon la norme AFNOR-NFT-40101 de décembre 1979).

De tels pneumatiques comportent encore usuellement au niveau des bourrelets une ou plusieurs couches d'éléments de renforcement appelés raidisseurs. Ces couches sont le plus souvent constituées d'éléments de renforcement orientés par rapport à la direction circonférentielle d'un angle inférieur à 45°, et le plus souvent inférieur à 25°. Ces couches d'éléments de renforcements ont notamment pour fonction de limiter les déplacements longitudinaux des matériaux constitutifs du bourrelet par rapport à la jante de la roue pour limiter une usure prématurée dudit bourrelet. Elles permettent également de limiter la déformation permanente du bourrelet sur le crochet de jante, due au phénomène de fluage dynamique des matériaux élastomériques. Cette déformation du bourrelet peut empêcher le rechapage des pneumatiques lorsqu'elle est excessive. Elles contribuent encore à la protection des zones basses du pneumatique contre les agressions subies lors du montage et du démontage des pneumatiques sur les jantes.

Par ailleurs, dans le cas d'ancrage de l'armature de carcasse réalisé autour d'une tringle, qui consiste à enrouler au moins en partie l'armature de carcasse autour d'une tringle dans chacun des bourrelets en formant un retournement s'étendant plus ou moins haut dans le flanc, les couches d'éléments de renforcement ou raidisseur permettent encore d'éviter ou de retarder le déroulement de l'armature de carcasse lors d'échauffements accidentels et excessifs de la jante.

Ces couches d'éléments de renforcement ou raidisseurs sont le plus souvent disposées axialement à l'extérieur du retournement de l'armature de carcasse et s'étendent sur une hauteur dans le flanc supérieure à celle du retournement notamment pour couvrir les extrémités libres des éléments de renforcement dudit retournement.

De telles conceptions de pneumatiques sont par exemples décrites dans les documents FR 2779387 ou US 2006/0000199.

La présence de ces couches d'éléments de renforcement ou raidisseurs complexifient la conception de ces zones des bourrelets du pneumatique. La présence d'une couche supplémentaire d'une part et son agencement par rapport notamment au retournement de l'armature de carcasse et à la tringle d'autre part conduisent à une conception nécessitant des mélanges caoutchouteux pour séparer les extrémités de couches et assurer le positionnement souhaité des différentes extrémités.

Par ailleurs, le document FR 2 787 744 décrit un pneumatique dans lequel l'armature de carcasse présente un retournement qui vient au contact de la partie principale de l'armature de carcasse, où la couche de mélange polymérique entre la partie principale et le retournement est interrompue, ne s'étendant pas radialement depuis la tringle jusqu'à l'extrémité dudit retournement.

Les inventeurs se sont ainsi donnés pour mission de fournir des pneumatiques pour véhicules "Poids-Lourds", dont les performances d'endurance notamment l'endurance des zones des bourrelets sont conservées et dont la conception est simplifiée et avantageusement dont la masse globale du pneumatique est diminuée.

Ce but a été atteint selon l'invention par un pneumatique destiné à être monté sur une jante creuse (15 ° drop centre), comprenant une armature de carcasse radiale, constituée d'une unique couche d'armature de carcasse formée d'éléments de renforcement insérés entre deux couches de calandrage de mélange polymérique, ledit pneumatique comprenant une armature de sommet, elle-même coiffée radialement d'une bande de roulement, ladite bande de roulement étant réunie à deux bourrelets par l'intermédiaire de deux flancs, la couche d'éléments de renforcement de l'armature de carcasse étant ancrée dans chacun des bourrelets par retournement autour d'une tringle pour former une partie principale de la couche d'armature de carcasse s'étendant d'une tringle à l'autre et un retournement de la couche d'armature de carcasse dans chacun des bourrelets, ledit retournement de la couche d'armature de carcasse étant séparé de la partie principale de la couche d'armature de carcasse par une première couche de mélange polymérique s'étendant radialement depuis la tringle jusqu'au moins l'extrémité du retournement de la couche d'armature de carcasse et ledit retournement de la couche d'armature de carcasse étant axialement vers l'extérieur au contact d'une deuxième couche de mélange polymérique, elle-même au moins au contact d'une troisième couche de mélange polymérique formant la surface extérieur du pneumatique dans la zone du bourrelet, ladite troisième couche de mélange polymérique étant destinée notamment à venir au contact de la jante, ladite troisième couche de mélange polymérique étant radialement vers l'extérieur au contact d'une quatrième couche de mélange polymérique formant la surface extérieure d'un flanc, et conformément à l'invention, dans une coupe méridienne dudit pneumatique,
- l'extrémité radialement extérieure de la première couche de mélange polymérique est radialement extérieure à l'extrémité du retournement de la couche d'armature de carcasse,
- l'extrémité du retournement de la couche d'armature de carcasse est radialement extérieure à l'extrémité radialement extérieure de la deuxième couche de mélange polymérique,
- l'extrémité radialement extérieure de la deuxième couche de mélange polymérique est radialement extérieure à l'extrémité radialement extérieure de la troisième couche de mélange polymérique,
- la distance entre l'extrémité du retournement de la couche d'armature de carcasse et le point radialement le plus intérieur du cercle circonscrit à la tringle est comprise entre 45 et 90% de la distance entre le point axialement le plus extérieur de la partie principale de la couche d'armature de carcasse et le point radialement le plus intérieur du cercle circonscrit à la tringle,
- le retournement de la couche d'armature de carcasse et la partie principale de la couche d'armature de carcasse sont les seules couches d'éléments de renforcement dont l'allongement à rupture est inférieur à 6 % présentes dans une zone du flanc constituant au moins 90% de la surface du flanc comprise radialement entre l'extrémité du retournement de la couche d'armature de carcasse et le point radialement le plus extérieur du cercle circonscrit à la tringle, et
- radialement vers l'extérieur, à partir d'un point C du retournement de la couche d'armature de carcasse situé à une distance du point radialement le plus intérieur du cercle circonscrit à la tringle comprise entre 30 et 55% de la distance entre l'extrémité du retournement de la couche d'armature de carcasse et le point radialement le plus intérieur du cercle circonscrit à la tringle, le retournement de la couche d'armature de carcasse et la partie principale de la couche d'armature de carcasse sont couplés sur une longueur comprise entre 15 et 65% de la distance entre l'extrémité du retournement de la couche d'armature de carcasse et le point radialement le plus intérieur du cercle circonscrit à la tringle, pour être ensuite découplés par la première couche de mélange polymérique jusqu'à l'extrémité du retournement de la couche d'armature de carcasse sur une longueur comprise entre 5 et 40 % de la distance entre l'extrémité du retournement de la couche d'armature de carcasse et le point radialement le plus intérieur du cercle circonscrit à la tringle.

Au sens de l'invention, une jante creuse (15° drop center) ou jante à seat coincé est une jante monobloc, telle que définie dans l'ETRTO, dont les sièges destinés à recevoir les bourrelets du pneumatique présentent une forme tronconique, l'angle formé avec la direction axiale étant sensiblement équivalant à 15°. Ces sièges sont par ailleurs prolongés par des crochets de jante de hauteur réduite par rapport à des crochets de jantes à bases plates dont les sièges de jante présentent des formes sensiblement cylindriques.

La position du point axialement le plus extérieur de la partie principale de l'armature de carcasse est déterminée sur un pneumatique monté et gonflé selon les conditions nominales. Cette détermination peut être réalisée par exemple selon une technique de tomographie.

Les positions des points radialement le plus intérieur et radialement le plus extérieur du cercle circonscrit à la tringle peuvent également être déterminées selon une technique de tomographie ou bien sont déterminées sur une coupe d'un pneumatique, dont l'écartement des bourrelets est le même que lorsque le pneumatique est monté sur la jante de montage préconisée par l'ETRTO, celui-ci étant donc ni monté ni gonflé.

La distance entre le point axialement le plus extérieur de la partie principale de la couche d'armature de carcasse et le point radialement le plus intérieur du cercle circonscrit à la tringle est mesurée sur un pneumatique monté et gonflé selon les conditions nominales. Cette mesure peut être réalisée par exemple selon une technique de tomographie.

Les autres distances, notamment mesurées depuis le point radialement le plus intérieur du cercle circonscrit à la tringle, peuvent également être mesurées selon une technique de tomographie ou bien sont mesurées sur une coupe d'un pneumatique, dont l'écartement des bourrelets est le même que lorsque le pneumatique est monté sur la jante de montage préconisée par l'ETRTO, celui-ci étant donc ni monté ni gonflé.

Au sens de l'invention, la partie principale de la couche d'armature de carcasse et le retournement de la couche d'armature de carcasse sont dits couplés si les éléments de renforcement respectifs la partie principale de la couche d'armature de carcasse et du retournement de la couche d'armature de carcasse sont séparés par une épaisseur de mélange caoutchouteux sensiblement constante et d'au plus 5 mm sur une longueur supérieure à 15% de la distance entre l'extrémité du retournement de la couche d'armature de carcasse et le point radialement le plus intérieur du cercle circonscrit à la tringle. L'épaisseur de mélange caoutchouteux séparant les éléments de renforcement respectifs de la partie principale de la couche d'armature de carcasse et du retournement de la couche d'armature de carcasse est mesurée selon la direction normale aux éléments de renforcement de l'armature de carcasse. Avantageusement selon l'invention, les éléments de renforcement respectifs de la partie principale de la couche d'armature de carcasse et du retournement de la couche d'armature de carcasse sont séparés par une épaisseur de mélange caoutchouteux sensiblement constante d'au plus 3.5 mm et de préférence ils sont séparés par une épaisseur de mélange caoutchouteux sensiblement constante d'au moins 0.8 mm et de préférence encore par une épaisseur de mélange caoutchouteux sensiblement constante d'au moins 2.5 mm.

Au sens de l'invention, une épaisseur de mélange caoutchouteux sensiblement constante séparant les éléments de renforcement respectifs de la partie principale de la couche d'armature de carcasse et du retournement de la couche d'armature de carcasse est une épaisseur qui ne varie pas de plus de 0.5 mm. Les variations d'épaisseur ne sont alors dues qu'aux phénomènes de fluage lors de la fabrication et de la cuisson du pneumatique.

Au sens de l'invention, la première couche de mélange polymérique peut être constituée de plusieurs mélanges polymériques dont les propriétés de rigidité sont sensiblement identiques et plus spécifiquement dont les modules d'élasticité sous tension à 10 % d'allongement sont sensiblement identiques. Au sens de l'invention, l'expression « sensiblement identiques » doit être comprise comme signifiant égaux aux incertitudes de mesures près. Pour diverses raisons, de telles couches séparant le retournement de l'armature de carcasse de l'armature de carcasse ont déjà été décrites comme étant constituées de plusieurs couches radialement superposées dont les propriétés de rigidités diffèrent; ce type de réalisation n'est pas adapté au cas de l'invention au risque de nuire aux performances d'endurance du pneumatique.

Au sens de l'invention, la partie principale de la couche d'armature de carcasse et le retournement la couche d'armature de carcasse sont dits découplés si, radialement à l'extérieur de la zone de couplage, l'épaisseur de mélange caoutchouteux séparant les éléments de renforcement respectifs de la partie principale de la couche d'armature de carcasse et du retournement de la couche d'armature de carcasse est supérieure à celle de la zone de couplage. Les éléments de renforcement respectifs de la partie principale de la couche d'armature de carcasse et du retournement de la couche d'armature de carcasse sont alors avantageusement séparés par une épaisseur de mélange caoutchouteux comprise entre 3 et 8 mm, ladite épaisseur de mélange caoutchouteux étant mesurée selon la direction normale aux éléments de renforcement de la partie principale de la couche d'armature de carcasse entre les éléments de renforcement respectifs de la partie principale de la couche d'armature de carcasse et du retournement de la couche d'armature de carcasse. De préférence selon l'invention, dans la zone de découplage, les éléments de renforcement respectifs de la partie principale de la couche d'armature de carcasse et du retournement de la couche d'armature de carcasse sont séparés d'au plus 6 mm et de préférence ils sont séparés d'au moins 4 mm.

Selon un mode de réalisation avantageux de l'invention, la zone de découplage peut être constituée d'une première partie, dite de transition, prolongeant la zone de couplage dans laquelle l'épaisseur de mélange caoutchouteux séparant les éléments de renforcement respectifs de la partie principale de la couche d'armature de carcasse et du retournement de la couche d'armature de carcasse augmente et d'une deuxième partie radialement la plus extérieure dans laquelle l'épaisseur de mélange caoutchouteux séparant les éléments de renforcement respectifs de la partie principale de la couche d'armature de carcasse et du retournement de la couche d'armature de carcasse est sensiblement constante.

Selon un mode de réalisation préféré de l'invention, l'armature de sommet comportant au moins une couche d'éléments de renforcement, le ratio de la distance radiale entre le point axialement le plus extérieur de la partie principale de la couche d'armature de carcasse et le point radialement le plus extérieur de la jante nominale, c'est-à-dire le point radialement le plus extérieur du crochet de jante, sur la distance radiale entre l'extrémité axialement extérieure de la couche d'éléments de renforcement de l'armature sommet axialement la plus large et le point radialement le plus extérieur de la jante nominale est inférieur ou égal à 55 %.

La distance radiale entre le point axialement le plus extérieur de la partie principale de la couche d'armature de carcasse et le point radialement le plus extérieur de la jante nominale est mesurée sur un pneumatique monté et gonflé selon les conditions nominales. Cette mesure peut être réalisée par exemple selon une technique de tomographie.

La distance radiale entre l'extrémité axialement extérieure de la couche d'éléments de renforcement de l'armature sommet axialement la plus large et le point radialement le plus extérieur de la jante nominale peut également être mesurée selon une technique de tomographie, le pneumatique étant monté et gonflé selon les conditions nominales.

De préférence encore selon l'invention, le ratio de la distance radiale entre le point axialement le plus extérieur de la partie principale de la couche d'armature de carcasse et le point radialement le plus extérieur de la jante nominale sur la distance radiale entre l'extrémité axialement extérieure de la couche d'éléments de renforcement de l'armature sommet axialement la plus large et le point radialement le plus extérieur de la jante nominale est inférieur à 53 %.

Les essais ont montré que les pneumatiques ainsi réalisés selon l'invention et dont la masse est inférieure à celle de pneumatiques de conception plus usuelle, comportant par exemple des couches d'éléments de renforcement supplémentaires de type raidisseurs, présentent des performances en termes d'endurance, et notamment en termes d'endurance des zones des bourrelets, au moins aussi bonnes que celles desdits pneumatiques de conception plus usuelle, voire supérieures.

Ces résultats sont d'autant plus surprenants que les conceptions plus usuelles de ce type de pneumatiques comportent un retournement de la couche d'armature de carcasse tel que la distance entre l'extrémité du retournement de la couche d'armature de carcasse et le point radialement le plus intérieur du cercle circonscrit à la tringle est inférieure à 45 % de la distance entre le point axialement le plus extérieur de la partie principale de la couche d'armature de carcasse et le point radialement le plus intérieur du cercle circonscrit à la tringle pour notamment améliorer les performances du pneumatique en termes d'endurance. En effet, il est usuel de concevoir des pneumatiques avec un retournement de la couche d'armature de carcasse de longueur réduite pour augmenter la distance entre le retournement de la couche d'armature de carcasse et la partie principale de la couche d'armature de carcasse, et ainsi limiter au mieux les contraintes de cisaillement qui s'initient entre la partie principale de la couche d'armature de carasse et son retournement notamment du fait des phénomènes de déradialisation qui apparaissent lors du roulage du pneumatique.

Il est également usuel dans la conception des pneumatiques dont la couche d'armature de carcasse présente un retournement, destinés notamment à être montés sur une jante à seat coincé et à équiper des véhicules portant de lourdes charges, d'éviter un rapprochement et donc d'autant plus un couplage du retournement de la couche d'armature de carcasse avec la partie principale de la couche d'armature de carcasse de façon à prévenir tout risque de cisaillement entre la partie principale de la couche d'armature de carcasse et son retournement qui vient pénaliser la première couche de mélange polymérique qui les sépare.

Les inventeurs ont ainsi su mettre en évidence que les pneumatiques réalisés conformément à l'invention et qui présentent notamment un retournement de la couche d'armature carcasse avec une longueur supérieure aux conceptions plus usuelles, un couplage du retournement de la couche d'armature de carasse avec la partie principale de la couche d'armature carcasse suivi d'un découplage dudit retournement de la couche d'armature de carasse et de la partie principale de la couche d'armature de carcasse, associés aux dimensionnements et positionnement relatifs des différents éléments constitutifs de la zone du bourrelet du pneumatique, permettent d'alléger le pneumatique et contre toute attente de conserver des propriétés en termes d'endurance satisfaisantes, voire de les améliorer.

Le découplage entre le retournement de la couche d'armature de carasse et la partie principale de la couche d'armature de carcasse qui suit la zone de couplage est obtenu par une augmentation de l'épaisseur de la première couche de mélange polymérique. Ce découplage permet de venir compenser la diminution de la tension dans les éléments de renforcement de l'armature de carcasse lorsque l'on s'approche de l'extrémité de son retournement pour absorber les contraintes de cisaillement entre la partie principale de la couche d'armature de carcasse et son retournement.

Avantageusement selon l'invention, la longueur de découplage est comprise entre 15 et 35% de la distance entre l'extrémité du retournement de la couche d'armature de carcasse et le point radialement le plus intérieur du cercle circonscrit à la tringle.

De préférence selon l'invention, le retournement de la couche d'armature de carcasse et la partie principale de la couche d'armature de carcasse sont couplés sur une longueur comprise entre 25 et 40% de la distance entre l'extrémité du retournement de la couche d'armature de carcasse et le point radialement le plus intérieur du cercle circonscrit à la tringle.

Avantageusement selon l'invention, l'extrémité radialement intérieure de la deuxième couche de mélange polymérique est radialement comprise entre le point radialement le plus extérieur du cercle circonscrit à la tringle et le point radialement le plus intérieur du cercle circonscrit à la tringle. Ce positionnement est déterminé sur une coupe d'un pneumatique, dont l'écartement des bourrelets est le même que lorsque le pneumatique est monté sur la jante de montage préconisée par l'ETRTO, celui-ci étant donc ni monté ni gonflé.

Selon un mode de réalisation préféré de l'invention, le module d'élasticité sous tension à 10 % d'allongement des couches de calandrage de la couche d'armature de carcasse est compris entre 4 et 16 MPa et de préférence entre 8 et 12 MPa. Ces valeurs permettent notamment de définir le compromis souhaité entre les performances d'endurance du pneumatique et ses performances en termes de résistance au roulement.

De préférence selon l'invention, le module d'élasticité sous tension à 10 % d'allongement de la première couche de mélange polymérique est inférieur ou égal au module d'élasticité sous tension à 10 % d'allongement du calandrage de la couche d'armature de carcasse. Ce choix permet notamment de concentrer les efforts de cisaillement au sein de la première couche de mélange polymérique.

De préférence encore selon l'invention, le module d'élasticité sous tension à 10 % d'allongement de la première couche de mélange polymérique est supérieur à 50% du module d'élasticité sous tension à 10 % d'allongement du calandrage de la couche d'armature de carcasse et de préférence est supérieur à 70 % du module d'élasticité sous tension à 10 % d'allongement du calandrage de la couche d'armature de carcasse. Ce choix permet de maintenir les efforts de cisaillement au sein de la première couche de mélange polymérique tout en assurant de bonnes performances d'endurance.

Avantageusement selon l'invention, le module d'élasticité sous tension à 10 % d'allongement de la deuxième couche de mélange polymérique est supérieur au module d'élasticité sous tension à 10 % d'allongement de la première couche de mélange polymérique et de préférence strictement inférieur à 25 MPa ; il est avantageusement encore inférieur à 150% du module d'élasticité sous tension à 10 % d'allongement du calandrage de la couche d'armature de carcasse. Selon cette réalisation avantageuse de l'invention, la deuxième couche de mélange polymérique confère suffisamment de rigidité pour assurer une bonne tenue en endurance du pneumatique lors des appuis sur les crochets de jante tout en assurant des performances en termes de résistance au roulement satisfaisantes.

Selon un mode de réalisation préféré de l'invention, pour favoriser le compromis entre les performances d'endurance et de résistance au roulement, le module d'élasticité sous tension à 10 % d'allongement de la première couche de mélange polymérique est supérieur ou égal au module d'élasticité sous tension à 10 % d'allongement de la troisième couche de mélange polymérique qui est lui-même supérieur ou égal au module d'élasticité sous tension à 10 % d'allongement de la quatrième couche de mélange polymérique.

Selon un mode préféré de réalisation de l'invention, dans tout plan méridien, sur une longueur du retournement de la couche d'armature de carcasse délimitée radialement entre l'extrémité dudit retournement et un point situé à une distance du point radialement le plus intérieur du cercle circonscrit à la tringle égale à 65% de la distance entre l'extrémité du retournement de la couche d'armature de carcasse et le point radialement le plus intérieur du cercle circonscrit à la tringle, tout point du retournement de la couche d'armature de carcasse est à une distance de la surface extérieure du pneumatique inférieure à 10 mm. De préférence encore, tout point du retournement de la couche d'armature de carcasse est à une distance de la surface extérieure du pneumatique inférieure à 10 mm sur une longueur du retournement de la couche d'armature de carcasse délimitée radialement entre l'extrémité dudit retournement et un point situé à une distance du point radialement le plus intérieur du cercle circonscrit à la tringle égale à 50% de la distance entre l'extrémité du retournement de la couche d'armature de carcasse et le point radialement le plus intérieur du cercle circonscrit à la tringle.

Avantageusement encore selon l'invention, dans tout plan méridien, sur une distance radiale supérieure à 4 mm, et de préférence supérieure à 10 mm, démarrant radialement à l'extérieur de l'extrémité du retournement de la couche d'armature de carcasse et à une distance radiale de l'extrémité du retournement de la couche d'armature de carcasse égale à 2.5 fois le diamètre d'un élément de renforcement de l'armature de carcasse et s'étendant radialement vers l'extérieur, l'épaisseur, mesurée selon la direction normale aux éléments de renforcement du retournement de la couche d'armature de carcasse à l'extrémité du retournement de la couche d'armature de carcasse, de la quatrième couche de mélange polymérique formant la surface extérieure d'un flanc est sensiblement constante.

Avantageusement encore selon l'invention, dans tout plan méridien, sur une distance radiale supérieure à 4 mm, et de préférence supérieure à 10 mm, démarrant radialement à l'intérieur de l'extrémité du retournement de la couche d'armature de carcasse et à une distance radiale de l'extrémité du retournement de la couche d'armature de carcasse égale à 2.5 fois le diamètre d'un élément de renforcement de l'armature de carcasse et s'étendant radialement vers l'intérieur, l'épaisseur, mesurée selon la direction normale aux éléments de renforcement du retournement de la couche d'armature de carcasse à l'extrémité du retournement de la couche d'armature de carcasse, de la quatrième couche de mélange polymérique formant la surface extérieure d'un flanc est sensiblement constante.

Au sens de l'invention, l'expression une épaisseur sensiblement constante signifie qu'elle ne varie pas de plus de 0.5 mm. Ces variations d'épaisseur ne sont dues qu'aux phénomènes de fluage lors de la fabrication et de la cuisson du pneumatique.

La quatrième couche de mélange polymérique ainsi réalisée selon l'invention semble permettre de contribuer au meilleur positionnement de la première couche de mélange polymérique et à sa mise en place pour assurer le couplage et le découplage de la partie principale de la couche d'armature de carcasse et du retournement de la couche d'armature de carcasse.

Selon un mode de réalisation avantageux de l'invention, dans tout plan méridien, dans chaque bourrelet, le pneumatique comporte une armature de contention entourant la tringle et un volume de mélange caoutchouteux directement au contact de la tringle.

Une telle armature de contention permet lors de l'utilisation du pneumatique de limiter les évolutions de forme de la tringle et ainsi de conserver des performances notamment en termes d'endurance satisfaisantes. En effet, le pneumatique selon l'invention dont la structure conduit à son allégement pourrait, dans certains cas d'utilisation ou types de roulage, conduire à une évolution géométrique dans la zone du bourrelet potentiellement nuisible aux performances en termes d'endurance du pneumatique. La présence d'une armature de contention telle que proposée permet de retarder voire de prévenir une telle évolution géométrique. Avantageusement encore selon l'invention, l'armature de contention est constituée d'une couche d'éléments de renforcement textiles de type polyamide aliphatique.

Avantageusement selon l'invention, les tringles sont des tringles paquets, c'est-à-dire des tringles formées d'un assemblage de fils gommés enroulés autour d'une forme, de préférence de forme hexagonale.

Selon un mode de réalisation de l'invention, notamment pour améliorer encore les performances en termes d'endurance du pneumatique, l'armature de carcasse est formée de câbles dont la structure est fortement pénétrée de mélanges polymériques. Il peut par exemple s'agir de câbles dont la construction permet d'augmenter leur pénétrabilité par les mélanges polymériques. Il peut encore s'agir de câbles dans lesquels des mélanges polymériques sont insérés lors de la fabrication des câbles eux-mêmes. Il s'agit alors par exemple de câbles à au moins deux couches, au moins une couche interne étant gainée d'une couche constituée d'une composition de caoutchouc non réticulable, réticulable ou réticulée, de préférence à base d'au moins un élastomère diénique.

Selon une variante de réalisation de l'invention, l'armature de sommet du pneumatique est formée d'au moins deux couches de sommet de travail d'éléments de renforcement inextensibles, croisés d'une couche à l'autre en faisant avec la direction circonférentielle des angles compris entre 10° et 45°.

Selon d'autres variantes de réalisation de l'invention, l'armature de sommet comporte encore au moins une couche d'éléments de renforcement circonférentiels.

Une réalisation préférée de l'invention prévoit encore que l'armature de sommet est complétée radialement à l'extérieur par au moins une couche supplémentaire, dite de protection, d'éléments de renforcement dits élastiques, orientés par rapport à la direction circonférentielle avec un angle compris entre 10° et 45° et de même sens que l'angle formé par les éléments inextensibles de la couche de travail qui lui est radialement adjacente.

La couche de protection peut avoir une largeur axiale inférieure à la largeur axiale de la couche de travail la moins large. Ladite couche de protection peut aussi avoir une largeur axiale supérieure à la largeur axiale de la couche de travail la moins large, telle qu'elle recouvre les bords de la couche de travail la moins large et, dans le cas de la couche radialement supérieure comme étant le moins large, telle qu'elle soit couplée, dans le prolongement axial de l'armature additionnelle, avec la couche de sommet de travail la plus large sur une largeur axiale, pour être ensuite, axialement à l'extérieur, découplée de ladite couche de travail la plus large par des profilés d'épaisseur au moins égale à 2 mm. La couche de protection formée d'éléments de renforcement élastiques peut, dans le cas cité ci-dessus, être d'une part éventuellement découplée des bords de ladite couche de travail la moins large par des profilés d'épaisseur sensiblement moindre que l'épaisseur des profilés séparant les bords des deux couches de travail, et avoir d'autre part une largeur axiale inférieure ou supérieure à la largeur axiale de la couche de sommet la plus large.

Selon l'un quelconque des modes de réalisation de l'invention évoqués précédemment, l'armature de sommet peut encore être complétée, radialement à l'intérieur entre l'armature de carcasse et la couche de travail radialement intérieure la plus proche de ladite armature de carcasse, par une couche de triangulation d'éléments de renforcement inextensibles métalliques en acier faisant, avec la direction circonférentielle, un angle supérieur à 60° et de même sens que celui de l'angle formé par les éléments de renforcement de la couche radialement la plus proche de l'armature de carcasse.

D'autres détails et caractéristiques avantageux de l'invention ressortiront ci-après de la description des exemples de réalisation de l'invention notamment en référence aux figures 1 à 2 qui représentent :
- figure1, une vue méridienne d'un schéma d'un pneumatique selon un mode de réalisation de l'invention,
- figure 2, une représentation schématique agrandie de la zone du bourrelet du pneumatique de la figure 1.

Les figures ne sont pas représentées à l'échelle pour en simplifier la compréhension.

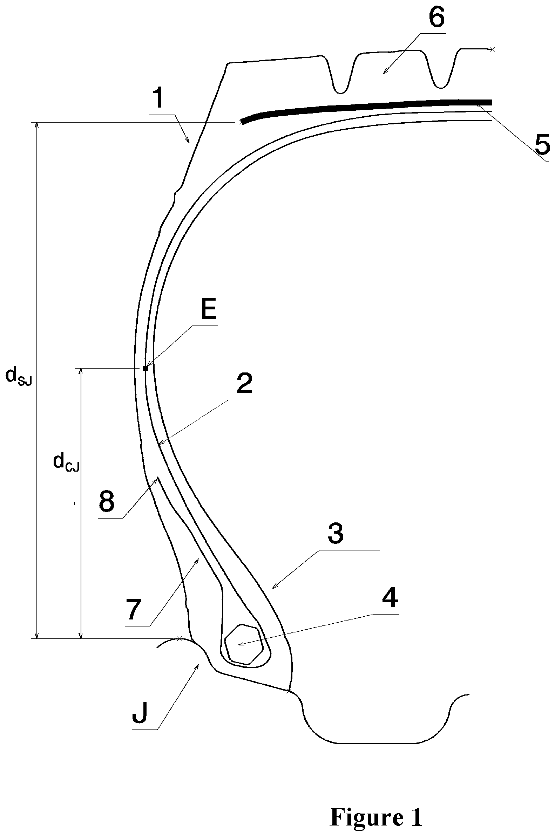

La figure 1 ne représente qu'une demi-vue d'un pneumatique qui se prolonge de manière symétrique par rapport au plan médian circonférentiel, ou plan équatorial, d'un pneumatique.

Sur la figure 1, le pneumatique 1 est de dimension 12 R 22.5, a un rapport de forme H/L égal à 0,90. Ledit pneumatique 1 comprend une armature de carcasse radiale 2 ancrée dans deux bourrelets 3. L'armature de carcasse 2 est frettée au sommet du pneumatique par une armature de sommet 5, elle-même coiffée d'une bande de roulement 6.

L'armature de carcasse 2, formée d'une seule couche de câbles métalliques, est enroulée dans chacun des bourrelets 3 autour d'une tringle 4 et forme dans chacun des bourrelets 3 un retournement de la couche d'armature de carcasse 7 présentant une extrémité 8.

L'armature de carcasse 2 est constituée d'éléments de renforcements entre deux couches de calandrage dont le module d'élasticité sous tension à 10 % d'allongement est égal à 9.8 MPa.

Les éléments de renforcements de l'armature de carcasse 2 sont des câbles 19.18 dont l'allongement à rupture est égal à 2.5 %.

Les câbles d'armature de carcasse du pneumatique 1 sont des câbles à couches de structure 1+6+12, non frettés, constitués d'un noyau central formé d'un fil, d'une couche intermédiaire formée de six fils et d'une couche externe formée de douze fils.

La figure 1 illustre le pneumatique monté sur sa jante nominale J ; le point E axialement le plus extérieur de la partie principale de la couche d'armature de carcasse 2 est ainsi déterminé le pneumatique étant gonflé à sa pression nominale, par exemple par tomographie.

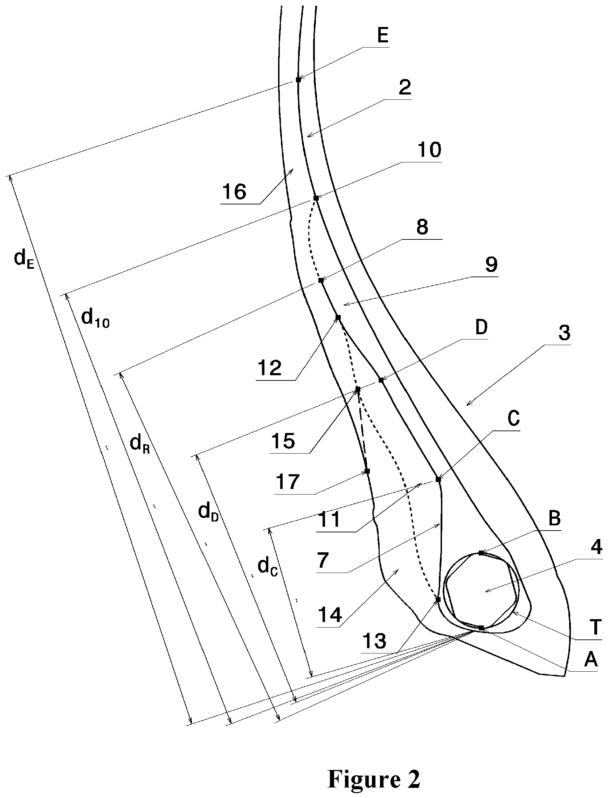

La figure 2 illustre de manière agrandie une représentation schématique en coupe d'un bourrelet 3 du pneumatique dans lequel on retrouve une partie de la couche d'armature de carcasse 2 enroulée autour d'une tringle 4 pour former un retournement 7 avec une extrémité 8.

Sur cette figure 2, est matérialisé le cercle T circonscrit à la tringle 4 et apparaît le point A radialement le plus intérieur dudit cercle T. Ce point A est défini sur une coupe radiale du pneumatique, dont l'écartement des bourrelets est le même que lorsque le pneumatique est monté sur la jante de montage préconisée par l'ETRTO, celui-ci n'étant pas monté sur une jante.

On détermine également le point B radialement le plus extérieur du cercle T.

La distance d_{E} entre le point E et le point A est égale à 128 mm.

La distance d_{R} entre le point 8 et le point A est égale à 90 mm.

Le ratio de la distance d_{R} sur la distance d_{E} est égal à 70% et donc compris entre 45 et 90%.

La distance radiale d_{CJ} entre le point axialement le plus extérieur de la partie principale de la couche d'armature de carcasse et le point radialement le plus extérieur de la jante nominale est égale à 108.2 mm.

La distance radiale d_{SJ} entre l'extrémité axialement extérieure de la couche d'éléments de renforcement de l'armature sommet axialement la plus large et le point radialement le plus extérieur de la jante nominale est égale à 206.7 mm.

Le ratio de la distance d_{CJ} sur la distance d_{SJ} est égal à 52,3 % et donc inférieur à 53 %.

Le retournement 7 de la couche d'armature de carcasse vient se coupler à la partie principale de la couche d'armature de carcasse 2 à partir du point C, tel que la distance d_{C} entre le point C et le point A est égale à 37 mm.

Le ratio de la distance d_{C} sur la distance d_{R} est égal à 41% et donc compris entre 30 et 55%.

Le retournement 7 de la couche d'armature de carcasse est ensuite découplé de la partie principale de la couche d'armature de carcasse 2 à partir du point D, tel que la distance d_{D} entre le point D et le point A est égale à 66 mm et telle que la longueur de couplage entre le point C et le point D est égale à 29 mm et donc comprise entre 25 et 40 % de la distance d_{R}. La longueur de couplage est mesurée selon la droite passant par les points C et D.

L'épaisseur de couplage entre la partie principale de la couche d'armature de carcasse 2 et le retournement 7 de la couche d'armature de carcasse, mesurée selon la direction normale aux éléments de renforcement de la partie principale de la couche d'armature de carcasse 2 entre les éléments de renforcement respectifs de la partie principale de la couche d'armature de carcasse et du retournement de la couche d'armature de carcasse, est sensiblement constante et égale à 2.9 mm.

La longueur de découplage entre le point D et le point 8 est égale à 21 mm et donc comprise entre 15 et 35 % de la distance d_{R}. La longueur de découplage est mesurée selon la droite passant par les points D et 8.

Le retournement 7 de la couche d'armature de carcasse est séparé de la partie principale de la couche d'armature de carcasse 2 par une première couche de mélange polymérique 9, présentant une extrémité radialement extérieure 10 à une distance d₁₀ du point A égale à 117 mm. La première couche de mélange polymérique 9 présente un module d'élasticité sous tension à 10 % d'allongement égal à 7.8 MPa et donc inférieur au module d'élasticité sous tension à 10 % d'allongement des couches de calandrage de l'armature de carcasse 2.

La première couche de mélange polymérique 9 est profilée pour venir en appui sur la tringle 4 et assurer le couplage et découplage entre le retournement de la couche d'armature de carcasse 7 et la partie principale de la couche d'armature de carcasse 2.

Axialement à l'extérieur du retournement 7 de la couche d'armature de carcasse est représentée la deuxième couche de mélange polymérique 11 dont l'extrémité radialement extérieure 12 est radialement à l'intérieure de l'extrémité 8 du retournement 7 de la couche d'armature de carcasse. L'extrémité radialement intérieure 13 de la deuxième couche de mélange polymérique 11 est radialement comprise entre les points A et B, respectivement radialement le plus intérieur et radialement le plus extérieur du cercle circonscrit à la tringle.

La deuxième couche de mélange polymérique 11 présente un module d'élasticité sous tension à 10 % d'allongement égal à 12.5 MPa et donc supérieur au module d'élasticité sous tension à 10 % d'allongement de la première couche de mélange polymérique 9 qui est égal à 7.8 MPa et inférieur à 150% du module d'élasticité sous tension à 10 % d'allongement des couches de calandrage de l'armature de carcasse 2 qui est égal à 9.8 MPa.

Au contact de la deuxième couche de mélange polymérique 11 et radialement sous la tringle, on trouve la troisième couche de mélange polymérique 14, dont l'extrémité axialement la plus extérieure 15 est radialement à l'intérieur de l'extrémité 12 de la deuxième couche de mélange polymérique 11.

La troisième couche de mélange polymérique 14 présente un module d'élasticité sous tension à 10 % d'allongement égal à 7.1 MPa.

Axialement au contact de la première couche de mélange polymérique 9, de la deuxième couche de mélange polymérique 11, et de la troisième couche de mélange polymérique 14, se trouve la quatrième couche de mélange polymérique 16. L'extrémité 17 radialement intérieure de la quatrième couche de mélange polymérique 16 est radialement intérieure à l'extrémité 15 de la troisième couche de mélange polymérique 14.

La quatrième couche de mélange polymérique 16 présente un module d'élasticité sous tension à 10 % d'allongement égal à 3.1 MPa.

Dans des zones situées de part et d'autre de l'extrémité 8 du retournement de la couche d'armature de carcasse 7, le profil de la quatrième couche de mélange polymérique 16 est tel que ladite quatrième couche de mélange polymérique 16 présente une épaisseur, mesurée selon la direction normale aux éléments de renforcement de l'armature de carcasse 2 à l'extrémité 8 du retournement 7, sensiblement constante et égale à 3.3 mm, sur deux longueurs radiales d'environ 5 mm à partir de chacun des deux points situés de part et d'autre de l'extrémité 8 à des distances de la dite extrémité 8 égales à 2.5 mm correspondant à plus de 2.5 fois le diamètre des câbles d'armature de carcasse, celui-ci étant égal à 0.9 mm.

Des essais ont été réalisés avec des pneumatiques I₁ réalisés selon l'invention conformément à la représentation des figures 1 et 2, des pneumatiques I₂ qui diffèrent de I₁ et d'autres avec des pneumatiques R dits de référence.

Les pneumatiques I₂ diffèrent des pneumatiques I₁ par l'utilisation d'une première couche de mélange polymérique dont le module d'élasticité sous tension à 10 % d'allongement est égal à 3.7 MPa et donc inférieur à 50 % de celui des calandrages de la couche d'armature de carcasse qui est égal à 9.8 MPa.

Les pneumatiques de référence R diffèrent des pneumatiques selon l'invention par la présence de raidisseurs et une zone du bourrelet plus usuelle avec notamment une distance entre l'extrémité du retournement de la couche d'armature de carcasse et le point radialement le plus intérieur du cercle circonscrit à la tringle égale à 37% de la distance entre le point axialement le plus extérieur de la partie principale de la couche d'armature de carcasse et le point radialement le plus intérieur du cercle circonscrit à la tringle et une deuxième couche de mélange polymérique dont le module d'élasticité sous tension à 10 % d'allongement est égal à 3.7 MPa et inférieur à celui des calandrages de la couche d'armature de carcasse qui est égal à 9.8 MPa.

Des essais d'endurance ont été réalisés en faisant rouler deux pneus rabotés l'un sur l'autre avec une pression régulée de 8b, avec un gonflage à l'azote et une charge de 6786 daN à une vitesse de 30km/h.

Les essais ont été réalisés pour les pneumatiques selon l'invention avec des conditions identiques à celles appliquées aux pneumatiques de référence.

Les essais réalisés conduisent pour les pneumatiques de référence R à des performances établissant la base 100. Les tests sont arrêtés lors de l'apparition d'une dégradation de la zone basse du pneumatique.

Les résultats des mesures sont présentés dans le tableau suivant. Ils sont exprimés en distance relative, une valeur de 100 étant attribuée au pneumatique R.

| Pneumatique R | Pneumatique I₁ | Pneumatique I₂ |
|---|---|---|
| 100 | 254 | 119 |

Par ailleurs, des mesures de résistance au roulement ont été réalisées.

Les résultats des mesures sont présentés dans le tableau suivant ; elles sont exprimées en Kg/t, une valeur de 100 étant attribuée au pneumatique R.

| Pneumatique R | Pneumatique I₁ | Pneumatique I₂ |
|---|---|---|
| 100 | 98 | 96 |

## Revendications

1. Pneumatique (1), destiné à être monté sur une jante creuse (J) de type « 15 ° drop centre », comprenant une armature de carcasse radiale, constituée d'une unique couche d'armature de carcasse (2) formée d'éléments de renforcement insérés entre deux couches de calandrage de mélange polymérique, ledit pneumatique (1) comprenant une armature de sommet (5), elle-même coiffée radialement d'une bande de roulement (6), ladite bande de roulement étant réunie à deux bourrelets (3) par l'intermédiaire de deux flancs, la couche d'éléments de renforcement de l'armature de carcasse (2) étant ancrée dans chacun des bourrelets (3) par retournement autour d'une tringle (4) pour former une partie principale de la couche d'armature de carcasse (2) s'étendant d'une tringle (4) à l'autre et un retournement (7) de la couche d'armature de carcasse dans chacun des bourrelets (3), ledit retournement (7) de la couche d'armature de carcasse étant séparé de la partie principale de la couche d'armature (2) de carcasse par une première couche de mélange polymérique (9) s'étendant radialement depuis la tringle (4) jusqu'au moins l'extrémité (8) du retournement (7) de la couche d'armature de carcasse et ledit retournement (7) de la couche d'armature de carcasse étant axialement vers l'extérieur au contact d'une deuxième couche de mélange polymérique (11), elle-même au moins au contact d'une troisième couche de mélange polymérique (14) formant la surface extérieur du pneumatique dans la zone du bourrelet (3), ladite troisième couche de mélange polymérique (14) étant destinée notamment à venir au contact de la jante (J), ladite troisième couche de mélange polymérique (14) étant radialement vers l'extérieur au contact d'une quatrième couche de mélange polymérique (16) formant la surface extérieure d'un flanc, où, dans une coupe méridienne dudit pneumatique,
- l'extrémité radialement extérieure (10) de la première couche de mélange polymérique (9) est radialement extérieure à l'extrémité (8) du retournement (7) de la couche d'armature de carcasse,
- l'extrémité (8) du retournement (7) de la couche d'armature de carcasse est radialement extérieure à l'extrémité radialement extérieure (12) de la deuxième couche de mélange polymérique (11),
- l'extrémité radialement extérieure (12) de la deuxième couche de mélange polymérique (11) est radialement extérieure à l'extrémité radialement extérieure (15) de la troisième couche de mélange polymérique (14),
- la distance d_{R} entre l'extrémité (8) du retournement (7) de la couche d'armature de carcasse et le point (A) radialement le plus intérieur du cercle (T) circonscrit à la tringle (4) est comprise entre 45 et 90% de la distance d_{E} entre le point (E) axialement le plus extérieur de la partie principale de la couche d'armature de carcasse (2) et le point (A) radialement le plus intérieur du cercle (T) circonscrit à la tringle (4),
- le retournement (7) de la couche d'armature de carcasse et la partie principale de la couche d'armature de carcasse (2) sont les seules couches d'éléments de renforcement dont l'allongement à rupture est inférieur à 6 % présentes dans une zone du flanc constituant au moins 90% de la surface du flanc comprise radialement entre l'extrémité (8) du retournement (7) de la couche d'armature de carcasse et le point (B) radialement le plus à l'extérieur de la tringle (4),
- radialement vers l'extérieur, à partir d'un point (C) du retournement (7) de la couche d'armature de carcasse situé à une distance d_{C} du point (A) radialement le plus intérieur du cercle (T) circonscrit à la tringle (4) comprise entre 30 et 55% de la distance d_{R} entre l'extrémité (8) du retournement (7) de la couche d'armature de carcasse et le point (A) radialement le plus intérieur du cercle (T) circonscrit à la tringle (4), le retournement (7) de la couche d'armature de carcasse et la partie principale de la couche d'armature de carcasse (2) sont couplés sur une longueur comprise entre 15 et 65% de la distance d_{R} entre l'extrémité (8) du retournement (7) de la couche d'armature de carcasse et le point (A) radialement le plus intérieur du cercle (T) circonscrit à la tringle (4), tels que les éléments de renforcement respectifs de la partie principale de la couche d'armature de carcasse (2) et du retournement (7) de la couche d'armature de carcasse sont séparés par une épaisseur de mélange caoutchouteux sensiblement constante et d'au plus 5 mm, pour être ensuite découplés par la première couche de mélange polymérique (9) jusqu'à l'extrémité (8) du retournement (7) de la couche d'armature de carcasse sur une longueur comprise entre 5 et 40 % de la distance entre l'extrémité (8) du retournement (7) de la couche d'armature de carcasse et le point (A) radialement le plus intérieur du cercle (T) circonscrit à la tringle (4).

2. Pneumatique (1) selon la revendication 1, l'armature de sommet (5) comportant au moins une couche d'éléments de renforcement, **caractérisé en ce que** le ratio de la distance radiale d_{CJ} entre le point (E) axialement le plus extérieur de la partie principale de la couche d'armature de carcasse (2) et le point radialement le plus extérieur de la jante nominale (J), sur la distance radiale d_{SJ} entre l'extrémité axialement extérieure de la couche d'éléments de renforcement de l'armature sommet (5) axialement la plus large et le point radialement le plus extérieur de la jante nominale (J) est inférieur ou égal à 55 %, et de préférence inférieur à 53 %.

3. Pneumatique (1) selon la revendication 1 ou 2, **caractérisé en ce que** la longueur de découplage est comprise entre 15 et 35 % de la distance d_{R} entre l'extrémité (8) du retournement (7) de l'armature de carcasse et le point (A) radialement le plus intérieur du cercle (T) circonscrit à la tringle (4).

4. Pneumatique (1) selon l'une des revendications 1 à 3, **caractérisé en ce que** le retournement (7) de l'armature de carcasse et l'armature de carcasse (2) sont couplés sur une longueur comprise entre 25 et 40% de la distance d_{R} entre l'extrémité (8) du retournement (7) de l'armature de carcasse et le point (A) radialement le plus intérieur du cercle (T) circonscrit à la tringle (4).

5. Pneumatique (1) selon l'une des revendications précédentes, **caractérisé en ce que** l'extrémité radialement intérieure (13) de la deuxième couche de mélange polymérique (11) est radialement comprise entre le point (B) radialement le plus extérieur du cercle (T) circonscrit à la tringle (4) et le point (A) radialement le plus intérieur du cercle (T) circonscrit à la tringle (4).

6. Pneumatique (1) selon l'une des revendications précédentes, **caractérisé en ce que** le module d'élasticité sous tension à 10 % d'allongement des couches de calandrage de la couche d'armature de carcasse (2) est compris entre 4 et 16 MPa et de préférence entre 8 et 12 MPa, les mesures de module étant effectuées en traction selon la norme AFNOR-NFT-46002 de septembre 1988 et en conditions normales de température et d'hygrométrie selon la norme AFNOR-NFT-40101 de décembre 1979.

7. Pneumatique (1) selon l'une des revendications précédentes, **caractérisé en ce que** le module d'élasticité sous tension à 10 % d'allongement de la première couche de mélange polymérique (9) est inférieur ou égal au module d'élasticité sous tension à 10 % d'allongement du calandrage de la couche d'armature de carcasse (2), les mesures de module étant effectuées en traction selon la norme AFNOR-NFT-46002 de septembre 1988 et en conditions normales de température et d'hygrométrie selon la norme AFNOR-NFT-40101 de décembre 1979.

8. Pneumatique (1) selon l'une des revendications précédentes, **caractérisé en ce que** le module d'élasticité sous tension à 10 % d'allongement de la première couche de mélange polymérique (9) est supérieur à 50% du module d'élasticité sous tension à 10 % d'allongement du calandrage de la couche d'armature de carcasse (2) et de préférence est supérieur à 70% du module d'élasticité sous tension à 10 % d'allongement du calandrage de la couche d'armature de carcasse (2), les mesures de module étant effectuées en traction selon la norme AFNOR-NFT-46002 de septembre 1988 et en conditions normales de température et d'hygrométrie selon la norme AFNOR-NFT-40101 de décembre 1979.

9. Pneumatique (1) selon l'une des revendications précédentes, **caractérisé en ce que,** dans tout plan méridien, sur une longueur du retournement (7) la couche d'armature de carcasse délimitée radialement entre l'extrémité (8) dudit retournement de la couche d'armature de carcasse et un point (D) situé à une distance d_{D} du point (A) radialement le plus intérieur du cercle (T) circonscrit à la tringle (4) égale à 65% de la distance d_{R} entre l'extrémité (8) du retournement (7) de la couche d'armature de carcasse et le point (A) radialement le plus intérieur du cercle (T) circonscrit à la tringle (4), tout point du retournement (7) de la couche d'armature de carcasse est à une distance de la surface extérieure du pneumatique (1) inférieure à 10 mm.

10. Pneumatique (1) selon l'une des revendications précédentes, **caractérisé en ce que,** dans tout plan méridien, dans chaque bourrelet (3), le pneumatique **(1)** comporte une armature de contention entourant la tringle (4) et un volume de mélange caoutchouteux directement au contact de la tringle (4), ladite armature de contention étant de préférence constituée d'une couche d'éléments de renforcement textiles de type polyamide aliphatique.

11. Pneumatique (1) selon l'une des revendications précédentes, **caractérisé en ce que** les tringles (4) sont des tringles paquets, de préférence de forme hexagonale.

## Patentansprüche

1. Reifen (1), welcher dazu bestimmt ist, auf einer hohlen Felge (J) vom Typ "15°-Steilschulterfelge" montiert zu werden, und welcher eine radiale Karkassenbewehrung umfasst, die aus einer einzigen Karkassenbewehrungsschicht (2) besteht, die von Verstärkungselementen gebildet wird, die zwischen zwei Kalandrierschichten aus Polymermischung eingefügt sind, wobei der Reifen (1) eine Scheitelbewehrung (5) umfasst, die ihrerseits radial von einem Laufstreifen (6) bedeckt ist, wobei der Laufstreifen über zwei Seitenwände mit zwei Wülsten (3) verbunden ist, wobei die Schicht von Verstärkungselementen der Karkassenbewehrung (2) in jedem der Wülste (3) durch Umschlag um einen Wulstkern (4) verankert ist, um einen Hauptteil der Karkassenbewehrungsschicht (2), der sich von einem Wulstkern (4) zum anderen erstreckt, und einen umgeschlagenen Teil (7) der Karkassenbewehrungsschicht in jedem der Wülste (3) zu bilden, wobei der umgeschlagene Teil (7) der Karkassenbewehrungsschicht vom Hauptteil der Karkassenbewehrungsschicht (2) durch eine erste Schicht aus Polymermischung (9) getrennt ist, die sich radial vom Wulstkern (4) bis wenigstens zum Ende (8) des umgeschlagenen Teils (7) der Karkassenbewehrungsschicht erstreckt, und wobei sich der umgeschlagene Teil (7) der Karkassenbewehrungsschicht axial außen mit einer zweiten Schicht aus Polymermischung (11) in Kontakt befindet, die sich ihrerseits wenigstens mit einer dritten Schicht aus Polymermischung (14) in Kontakt befindet, welche die Außenfläche des Reifens im Bereich des Wulstes (3) bildet, wobei die dritte Schicht aus Polymermischung (14) insbesondere dazu bestimmt ist, mit der Felge (J) in Kontakt zu kommen, wobei sich die dritte Schicht aus Polymermischung (14) radial außen mit einer vierten Schicht aus Polymermischung (16) in Kontakt befindet, welche die Außenfläche einer Seitenwand bildet, wobei in einem Meridianschnitt des Reifens
- das radial äußere Ende (10) der ersten Schicht aus Polymermischung (9) radial außerhalb des Endes (8) des umgeschlagenen Teils (7) der Karkassenbewehrungsschicht liegt,
- das Ende (8) des umgeschlagenen Teils (7) der Karkassenbewehrungsschicht radial außerhalb des radial äußeren Endes (12) der zweiten Schicht aus Polymermischung (11) liegt,
- das radial äußere Ende (12) der zweiten Schicht aus Polymermischung (11) radial außerhalb des radial äußeren Endes (15) der dritten Schicht aus Polymermischung (14) liegt,
- der Abstand d_{R} zwischen dem Ende (8) des umgeschlagenen Teils (7) der Karkassenbewehrungsschicht und dem radial innersten Punkt (A) des dem Wulstkern (4) umbeschriebenen Kreises (T) zwischen 45 und 90 % des Abstands d_{E} zwischen dem axial äußersten Punkt (E) des Hauptteils der Karkassenbewehrungsschicht (2) und dem radial innersten Punkt (A) des dem Wulstkern (4) umbeschriebenen Kreises (T) beträgt,
- der umgeschlagene Teil (7) der Karkassenbewehrungsschicht und der Hauptteil der Karkassenbewehrungsschicht (2) die einzigen Schichten von Verstärkungselementen, deren Bruchdehnung kleiner als 6 % ist, sind, die in einem Bereich der Seitenwand vorhanden sind, der wenigstens 90 % der Fläche der Seitenwand bildet, die radial zwischen dem Ende (8) des umgeschlagenen Teils (7) der Karkassenbewehrungsschicht und dem radial äußersten Punkt (B) des Wulstkerns (4) liegt,
- radial außen ab einem Punkt (C) des umgeschlagenen Teils (7) der Karkassenbewehrungsschicht, der sich in einem Abstand d_{C} von dem radial innersten Punkt (A) des dem Wulstkern (4) umbeschriebenen Kreises (T) befindet, der zwischen 30 und 55 % des Abstands d_{R} zwischen dem Ende (8) des umgeschlagenen Teils (7) der Karkassenbewehrungsschicht und dem radial innersten Punkt (A) des dem Wulstkern (4) umbeschriebenen Kreises (T) beträgt, der umgeschlagene Teil (7) der Karkassenbewehrungsschicht und der Hauptteil der Karkassenbewehrungsschicht (2) auf einer Länge, die zwischen 15 und 65 % des Abstands d_{R} zwischen dem Ende (8) des umgeschlagenen Teils (7) der Karkassenbewehrungsschicht und dem radial innersten Punkt (A) des dem Wulstkern (4) umbeschriebenen Kreises (T) beträgt, derart gekoppelt sind, dass die jeweiligen Verstärkungselemente des Hauptteils der Karkassenbewehrungsschicht (2) und des umgeschlagenen Teils (7) der Karkassenbewehrungsschicht durch eine Dicke einer Kautschukmischung getrennt sind, die im Wesentlichen konstant ist und höchstens 5 mm beträgt, um anschließend durch die erste Schicht aus Polymermischung (9) bis zum Ende (8) des umgeschlagenen Teils (7) der Karkassenbewehrungsschicht auf einer Länge, die zwischen 5 und 40 % des Abstands zwischen dem Ende (8) des umgeschlagenen Teils (7) der Karkassenbewehrungsschicht und dem radial innersten Punkt (A) des dem Wulstkern (4) umbeschriebenen Kreises (T) beträgt, entkoppelt zu sein.

2. Reifen (1) nach Anspruch 1, wobei die Scheitelbewehrung (5) wenigstens eine Schicht von Verstärkungselementen aufweist, **dadurch gekennzeichnet, dass** das Verhältnis des radialen Abstands d_{CJ} zwischen dem axial äußersten Punkt (E) des Hauptteils der Karkassenbewehrungsschicht (2) und dem radial äußersten Punkt der Auslegungsfelge (J) zum radialen Abstand d_{SJ} zwischen dem axial äußeren Ende der axial breitesten Schicht von Verstärkungselementen der Scheitelbewehrung (5) und dem radial äußersten Punkt der Auslegungsfelge (J) kleiner oder gleich 55 % und vorzugsweise kleiner als 53 % ist.

3. Reifen (1) nach Anspruch 1 oder 2, **dadurch gekennzeichnet, dass** die Länge der Entkopplung zwischen 15 und 35 % des Abstands d_{R} zwischen dem Ende (8) des umgeschlagenen Teils (7) der Karkassenbewehrung und dem radial innersten Punkt (A) des dem Wulstkern (4) umbeschriebenen Kreises (T) beträgt.

4. Reifen (1) nach einem der Ansprüche 1 bis 3, **dadurch gekennzeichnet, dass** der umgeschlagene Teil (7) der Karkassenbewehrung und die Karkassenbewehrung (2) auf einer Länge gekoppelt sind, die zwischen 25 und 40 % des Abstands d_{R} zwischen dem Ende (8) des umgeschlagenen Teils (7) der Karkassenbewehrung und dem radial innersten Punkt (A) des dem Wulstkern (4) umbeschriebenen Kreises (T) beträgt.

5. Reifen (1) nach einem der vorhergehenden Ansprüche, **dadurch gekennzeichnet, dass** das radial innere Ende (13) der zweiten Schicht aus Polymermischung (11) radial zwischen dem radial äußersten Punkt (B) des dem Wulstkern (4) umbeschriebenen Kreises (T) und dem radial innersten Punkt (A) des dem Wulstkern (4) umbeschriebenen Kreises (T) liegt.

6. Reifen (1) nach einem der vorhergehenden Ansprüche, **dadurch gekennzeichnet, dass** der Elastizitätsmodul unter Spannung bei 10 % Dehnung der Kalandrierschichten der Karkassenbewehrungsschicht (2) zwischen 4 und 16 MPa und vorzugsweise zwischen 8 und 12 MPa liegt, wobei die Messungen des Moduls im Zugversuch gemäß der Norm AFNOR-NFT-46002 vom September 1988 und unter Normbedingungen für Temperatur und Feuchtigkeit gemäß der Norm AFNOR-NFT-40101 vom Dezember 1979 durchgeführt werden.

7. Reifen (1) nach einem der vorhergehenden Ansprüche, **dadurch gekennzeichnet, dass** der Elastizitätsmodul unter Spannung bei 10 % Dehnung der ersten Schicht aus Polymermischung (9) kleiner oder gleich dem Elastizitätsmodul unter Spannung bei 10 % Dehnung der Kalandrierung der Karkassenbewehrungsschicht (2) ist, wobei die Messungen der Module im Zugversuch gemäß der Norm AFNOR-NFT-46002 vom September 1988 und unter Normbedingungen für Temperatur und Feuchtigkeit gemäß der Norm AFNOR-NFT-40101 vom Dezember 1979 durchgeführt werden.

8. Reifen (1) nach einem der vorhergehenden Ansprüche, **dadurch gekennzeichnet, dass** der Elastizitätsmodul unter Spannung bei 10 % Dehnung der ersten Schicht aus Polymermischung (9) größer als 50 % des Elastizitätsmoduls unter Spannung bei 10 % Dehnung der Kalandrierung der Karkassenbewehrungsschicht (2) und vorzugsweise größer als 70 % des Elastizitätsmoduls unter Spannung bei 10 % Dehnung der Kalandrierung der Karkassenbewehrungsschicht (2) ist, wobei die Messungen der Module im Zugversuch gemäß der Norm AFNOR-NFT-46002 vom September 1988 und unter Normbedingungen für Temperatur und Feuchtigkeit gemäß der Norm AFNOR-NFT-40101 vom Dezember 1979 durchgeführt werden.

9. Reifen (1) nach einem der vorhergehenden Ansprüche, **dadurch gekennzeichnet, dass** in jeder Meridianebene auf einer Länge des umgeschlagenen Teils (7) der Karkassenbewehrungsschicht, die radial zwischen dem Ende (8) des umgeschlagenen Teils (7) der Karkassenbewehrungsschicht und einem Punkt (D) begrenzt ist, der sich in einem Abstand d_{D} von dem radial innersten Punkt (A) des dem Wulstkern (4) umbeschriebenen Kreises (T) befindet, der 65 % des Abstands d_{R} zwischen dem Ende (8) des umgeschlagenen Teils (7) der Karkassenbewehrungsschicht und dem radial innersten Punkt (A) des dem Wulstkern (4) umbeschriebenen Kreises (T) beträgt, jeder Punkt des umgeschlagenen Teils (7) der Karkassenbewehrungsschicht sich in einem Abstand von der Außenfläche des Reifens (1) befindet, der kleiner als 10 mm ist.

10. Reifen (1) nach einem der vorhergehenden Ansprüche, **dadurch gekennzeichnet, dass** in jeder Meridianebene, in jedem Wulst (3), der Reifen (1) eine Fixierungsbewehrung, die den Wulstkern (4) umgibt, und ein Volumen von Kautschukmischung, das sich mit dem Wulstkern (4) direkt in Kontakt befindet, aufweist, wobei die Fixierungsbewehrung vorzugsweise aus einer Schicht aus textilen Verstärkungselementen vom Typ eines aliphatischen Polyamids besteht.

11. Reifen (1) nach einem der vorhergehenden Ansprüche, **dadurch gekennzeichnet, dass** die Wulstkerne (4) Wulstkernpakete sind, vorzugsweise von sechseckiger Form.

## Claims

1. Tyre (1) intended to be fitted on a hollow rim (J) of the "15° drop centre" type, comprising a radial carcass reinforcement, made up of a single carcass reinforcement layer (2) formed by reinforcing elements inserted between two calendering layers of polymer compound, said tyre (1) comprising a crown reinforcement (5), itself capped radially by a tread (6), said tread being connected to two beads (3) via two sidewalls, the layer of reinforcing elements of the carcass reinforcement (2) being anchored in each of the beads (3) by a turn-up around a bead wire (4) in order to form a main part of the carcass reinforcement layer (2) extending from one bead wire (4) to the other and a turn-up (7) of the carcass reinforcement layer in each of the beads (3), said turn-up (7) of the carcass reinforcement layer being separated from the main part of the carcass reinforcement layer (2) by a first layer of polymer compound (9) extending radially from the bead wire (4) to at least the end (8) of the turn-up (7) of the carcass reinforcement layer and said turn-up (7) of the carcass reinforcement layer being in contact, axially towards the outside, with a second layer of polymer compound (11), itself at least in contact with a third layer of polymer compound (14) forming the outer surface of the tyre in the bead (3) region, said third layer of polymer compound (14) being intended notably to come into contact with the rim (J), said third layer of polymer compound (14) being in contact, radially towards the outside, with a fourth layer of polymer compound (16) forming the outer surface of a sidewall, wherein, in a meridian section of said tyre,
- the radially outer end (10) of the first layer of polymer compound (9) is radially outside the end (8) of the turn-up (7) of the carcass reinforcement layer,
- the end (8) of the turn-up (7) of the carcass reinforcement layer is radially outside the radially outer end (12) of the second layer of polymer compound (11),
- the radially outer end (12) of the second layer of polymer compound (11) is radially outside the radially outer end (15) of the third layer of polymer compound (14),
- the distance d_{R} between the end (8) of the turn-up (7) of the carcass reinforcement layer and the radially innermost point (A) of the circle (T) circumscribed on the bead wire (4) is between 45 and 90% of the distance d_{E} between the axially outermost point (E) of the main part of the carcass reinforcement layer (2) and the radially innermost point (A) of the circle (T) circumscribed on the bead wire (4),
- the turn-up (7) of the carcass reinforcement layer and the main part of the carcass reinforcement layer (2) are the only layers of reinforcing elements, of which the elongation at break is less than 6%, that are present in a sidewall region making up at least 90% of the surface area of the sidewall comprised radially between the end (8) of the turn-up (7) of the carcass reinforcement layer and the radially outermost point (B) of the bead wire (4),
- radially towards the outside, starting from a point (C) of the turn-up (7) of the carcass reinforcement layer that is situated at a distance dc from the radially innermost point (A) of the circle (T) circumscribed on the bead wire (4) of between 30 and 55% of the distance d_{R} between the end (8) of the turn-up (7) of the carcass reinforcement layer and the radially innermost point (A) of the circle (T) circumscribed on the bead wire (4), the turn-up (7) of the carcass reinforcement layer and the main part of the carcass reinforcement layer (2) are coupled, along a length of between 15 and 65% of the distance between the end of the turn-up of the carcass reinforcement layer and the radially d_{R} innermost point (A) of the circle (T) circumscribed on the bead wire (4), such as the respective reinforcing elements of the main part of the carcass reinforcement layer (2) and of the turn-up (7) of the carcass reinforcement layer are separated by a thickness of rubber compound that is substantially constant and at most 5 mm, and are then decoupled by the first layer of polymer compound (9) as far as the end (8) of the turn-up (7) of the carcass reinforcement layer along a length of between 5 and 40% of the distance between the end (8) of the turn-up (7) of the carcass reinforcement layer and the radially innermost point (A) of the circle (T) circumscribed on the bead wire (4).

2. Tyre (1) according to Claim 1, wherein the crown reinforcement (5) has at least one layer of reinforcing elements, **characterized in that** the ratio of the radial distance d_{CJ} between the axially outermost point (E) of the main part of the carcass reinforcement layer (2) and the radially outermost point of the nominal rim (J), to the radial distance d_{SJ} between the axially outer end of the axially widest layer of reinforcing elements of the crown reinforcement and the radially outermost point of the nominal rim (J) is less than or equal to 55% and preferably less than 53%.

3. Tyre (1) according to Claim 1 or 2, **characterized in that** the decoupling length is between 15 and 35% of the distance d_{R} between the end (8) of the turn-up (7) of the carcass reinforcement layer and the radially innermost point (A) of the circle (T) circumscribed on the bead wire (4).

4. Tyre (1) according to one of Claims 1 to 3, **characterized in that** the turn-up (7) of the carcass reinforcement and the carcass reinforcement (2) are coupled along a length of between 25 and 40% of the distance d_{R} between the end (8) of the turn-up (7) of the carcass reinforcement and the radially innermost point (A) of the circle (T) circumscribed on the bead wire (4).

5. Tyre (1) according to one of the preceding claims, **characterized in that** the radially inner end (13) of the second layer of polymer compound (11) is radially comprised between the radially outermost point (B) of the circle (T) circumscribed on the bead wire (4) and the radially innermost point (A) of the circle (T) circumscribed on the bead wire (4).

6. Tyre (1) according to one of the preceding claims, **characterized in that** the tensile elastic modulus at 10% elongation of the calendering layers of the carcass reinforcement layer (2) is between 4 and 16 MPa and preferably between 8 and 12 MPa, the modulus measurements being taken under tension in accordance with standard AFNOR-NFT-46002 of September 1988 and with normal temperature and relative humidity conditions in accordance with standard AFNOR-NFT-40101 of December 1979.

7. Tyre (1) according to one of the preceding claims, **characterized in that** the tensile elastic modulus at 10% elongation of the first layer of polymer compound (9) is less than or equal to the tensile elastic modulus at 10% elongation of the calendering of the carcass reinforcement layer (2), the modulus measurements being taken under tension in accordance with standard AFNOR-NFT-46002 of September 1988 and with normal temperature and relative humidity conditions in accordance with standard AFNOR-NFT-40101 of December 1979.

8. Tyre (1) according to one of the preceding claims, **characterized in that** the tensile elastic modulus at 10% elongation of the first layer of polymer compound (9) is greater than 50% of the tensile elastic modulus at 10% elongation of the calendering of the carcass reinforcement layer (2) and preferably is greater than 70% of the tensile elastic modulus at 10% elongation of the calendering of the carcass reinforcement layer (2), the modulus measurements being taken under tension in accordance with standard AFNOR-NFT-46002 of September 1988 and with normal temperature and relative humidity conditions in accordance with standard AFNOR-NFT-40101 of December 1979.

9. Tyre (1) according to one of the preceding claims, **characterized in that,** in every meridian plane, along a length of the turn-up (7) of the carcass reinforcement layer that is delimited radially between the end (8) of said turn-up (7) of the carcass reinforcement layer and a point (D) situated at a distance do from the radially innermost point (A) of the circle (T) circumscribed on the bead wire (4) that is equal to 65% of the distance d_{R} between the end (8) of the turn-up (7) of the carcass reinforcement layer and the radially innermost point (A) of the circle (T) circumscribed on the bead wire (4), every point of the turn-up (7) of the carcass reinforcement layer is at distance from the outer surface of the tyre (1) of less than 10 mm.

10. Tyre (1) according to one of the preceding claims, **characterized in that**, in every meridian plane, in each bead (3), the tyre (1) has a retention reinforcement surrounding the bead wire (4) and a volume of rubber compound in direct contact with the bead wire (4), said retention reinforcement preferably consisting of a layer of textile reinforcing elements of the aliphatic polyamide type.

11. Tyre (1) according to one of the preceding claims, **characterized in that** the bead wires (4) are bead-wire bundles, preferably of hexagonal shape.
